# DEMANDE DE BREVET EUROPEEN

(11) **EP 1 197 853 A1**
(43) Date de publication de la demande: **17.04.2002**
(21) Numéro de dépôt: 01402046.5
(22) Date de dépôt: 27.07.2001
(51) Int. Cl.: G06F 9/44

(54) **Générateur universel de code informatique**

(30) Priorité: 28.07.2000 FR 0009971
(71) Demandeur: Airsys ATM S.A., 92220 Bagneux (FR)
(72) Inventeur: Fuchs, Emmanuel, 94117 Arcueil Cedex (FR); Lacoste, Thierry, 94117 Arcueil Cedex (FR)
(74) Mandataire: Lucas, Laurent Jacques

(57) **Abrégé**

La présente invention concerne un générateur universel de code informatique.

Le générateur comporte au moins :
- une unité frontale (FE) créant un fichier intermédiaire (6) par analyse grammaticale et syntaxique du fichier de spécifications (4), le fichier intermédiaire comportant un arbre syntaxique décrivant les données du fichier de spécifications (4), chaque donnée extraite de ce fichier (4) par l'unité frontale FE étant associée à un noeud (21, 22, 23, 24, 25, 26) de l'arbre ;
- un fichier d'instructions (3) définissant les règles de programmation associées à chaque noeud, en fonction du code à générer (7) ;
- une unité de codage (BE) générant le code de sortie (7) par lecture du fichier intermédiaire (6) et de l'arbre syntaxique.

L'invention s'applique notamment pour la génération automatique de code telle que par exemple pour des translations de langages informatiques.

## Description

La présente invention concerne un générateur universel de code informatique. Elle s'applique notamment pour la génération automatique de code telle que par exemple pour des translations de langages informatiques.

Un but d'un générateur automatique de code est notamment de permettre une économie de temps et donc de réduire les coûts de développement des systèmes utilisant des programmes informatiques. En effet, le code généré peut être représenter un nombre très important de lignes, par exemple plusieurs dizaines de milliers de lignes. Ce qui demande beaucoup de temps à un ou plusieurs programmeurs. La génération automatique de code présente par ailleurs d'autres avantages par rapport à une programmation humaine. En effet, le code généré est uniforme. Ainsi, lorsqu'une erreur est détectée, la correction peut être appliquée uniformément dans tous les fichiers comportant cette erreur.

Un générateur de code nécessite en premier lieu un fichier de spécifications. Ce fichier comporte en fait les données provenant de l'utilisateur. Ces données sont présentées par exemple sous un langage informatique évolué, par exemple des langages tels que IDL 2, IDL 3 ou ADA. Le générateur nécessite par ailleurs un ensemble de règles par lesquels l'utilisateur définit l'utilisation des données présentes dans le fichier de spécification afin de définir le code approprié. Un inconvénient est qu'il est nécessaire de définir ces règles en fonction de chaque langage. En d'autres termes, pour chaque nouveau langage, un nouvel ensemble de règles doit être défini. Or il existe une grande quantité de langages. Il faut donc réaliser autant de générateurs de codes qu'il existe de langages informatiques, ce qui est lourd et coûteux.

Enfin, de nombreux systèmes utilisent des interfaces communes programmées dans un même langage. L'hétérogénéité des langages utilisés par ailleurs impose donc de traduire ces derniers en des langages adaptés aux interfaces, c'est-à-dire de créer un code adapté à ces derniers.

Un but de l'invention est de permettre la réalisation d'un générateur de code automatique indépendant des langages utilisés. A cet effet, l'invention a pour objet un générateur de code informatique à partir d'un fichier de spécifications qui comporte au moins :
- une unité frontale FE créant un fichier intermédiaire par analyse grammaticale et syntaxique du fichier de spécifications, le fichier intermédiaire comportant un arbre syntaxique décrivant les données du fichier de spécifications, chaque donnée extraite de ce fichier par l'unité frontale FE étant associée à un noeud de l'arbre ;
- un fichier d'instructions définissant les règles de programmation associées à chaque noeud, en fonction du code à générer ;
- une unité de codage BE générant le code par lecture du fichier intermédiaire et de l'arbre syntaxique.

L'unité frontale FE lit un fichier décrivant la grammaire du langage du fichier de spécifications. Elle décompose le fichier de spécifications en éléments logiciels formant les noeuds de l'arbre syntaxique, selon une arborescence fonctionnelle conforme au fichier de spécifications, les éléments logiciels étant les données extraites de ce fichier.

Le fichier d'instructions comporte les règles de programmation du langage de sortie associées à chaque élément logiciel d'un noeud, une règle et la façon dont est appliquée cette règle étant associée à chaque noeud. Les éléments logiciels associés aux noeuds sont par exemple des interfaces, des variables, des constantes, des opérations et fonctions logiques ou mathématiques.

L'invention a notamment pour principaux avantages qu'elle permet une économie de réalisation d'un générateur de code informatique et qu'elle permet une grande souplesse d'utilisation d'un tel générateur.

D'autres caractéristiques et avantages de l'invention apparaîtront à l'aide de la description qui suit faite en regard de dessins annexés qui représentent :
- la figure 1, une représentation par son architecture logicielle d'un générateur de code selon l'invention ;
- la figure 2, un exemple de représentation codée et un exemple de représentation schématique d'un arbre syntaxique utilisé par un codeur selon l'invention.

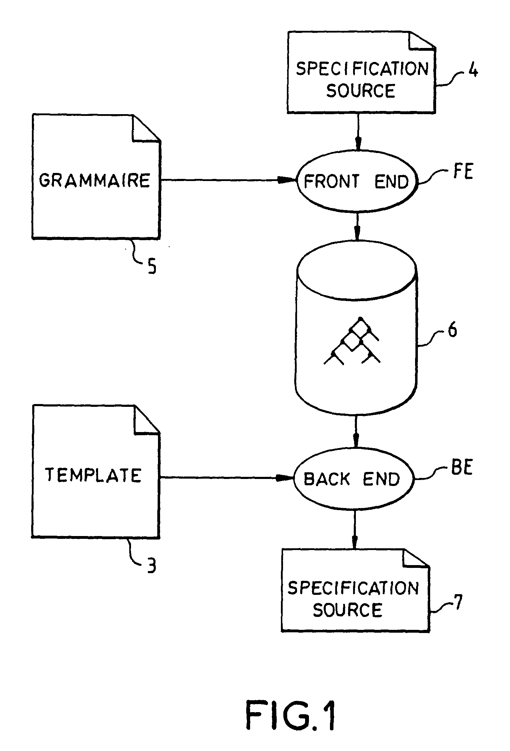

La figure 1 illustre un exemple de réalisation d'un générateur de code selon l'invention. Il comporte plusieurs parties dont notamment une unité frontale FE, encore appelée par la suite "Front End", une unité de codage BE, encore appelée par la suite "Back End" et un fichier d'instruction 3, encore appelé par la suite "Template".

L'unité "Front End" FE communique avec le fichier des spécifications 4 d'un langage de départ, par exemple un langage à translater, c'est-à-dire traduire, dans un autre langage. Cette unité frontale FE communique aussi avec un fichier 5 décrivant la grammaire du langage du fichier de spécifications. L'unité frontale FE traite donc notamment avec deux séries de données d'entrée, celle fournies par le fichier de spécifications 4, décrivant notamment la syntaxe du langage, et celles fournies par le fichier de grammaire 5. L'analyse grammaticale effectuée de façon classique par l'unité FE permet à cette dernière d'extraire les données de plus haut niveau contenues dans le fichier de spécifications 4.

L'unité frontale FE génère un fichier intermédiaire 6 qui comporte un arbre syntaxique représentant le fichier analysé 4. Cet arbre contient toutes les données extraites de ce fichier de spécifications 4 mais ne conserve aucune des spécificités du langage utilisé dans ce fichier 4. Le fichier intermédiaire 6 est par exemple écrit en code ASCII.

L'unité "Back End" BE délivre le fichier de spécifications de sortie 7. Ce fichier comporte par exemple la traduction du langage d'entrée 4 dans un nouveau langage informatique. Le langage de sortie peut être tout type de langage, tel que par exemple le langage C ou le langage ADA. L'unité BE nécessite deux séries de données d'entrée, les données fournies par le fichier intermédiaire 6 créé par l'unité frontale FE, c'est-à-dire l'arbre syntaxique qu'il contient, et les données fournies par le fichier "Template" 3. Ce dernier décrit la façon d'utiliser les données contenues dans le fichier intermédiaire 6 et comment les traiter pour générer le bon code. Avantageusement, l'unité BE est entièrement générique et n'est jamais changée ou modifiée lorsqu'un nouveau fichier de spécifications 4, donc un nouveau langage, est présent à l'entrée de l'unité frontale FE. Le fichier "Template" 3 doit être créé par les utilisateurs. Ce fichier est notamment fonction du code ou langage à générer. Il permet notamment d'accéder aux données venant des spécifications d'entrée 4, de les manipuler et de les transformer, et ainsi permet à l'unité BE de générer le code attendu. A cet effet, il comporte notamment toutes les fonctionnalités nécessaires pour extraire les données du fichier intermédiaire 6.

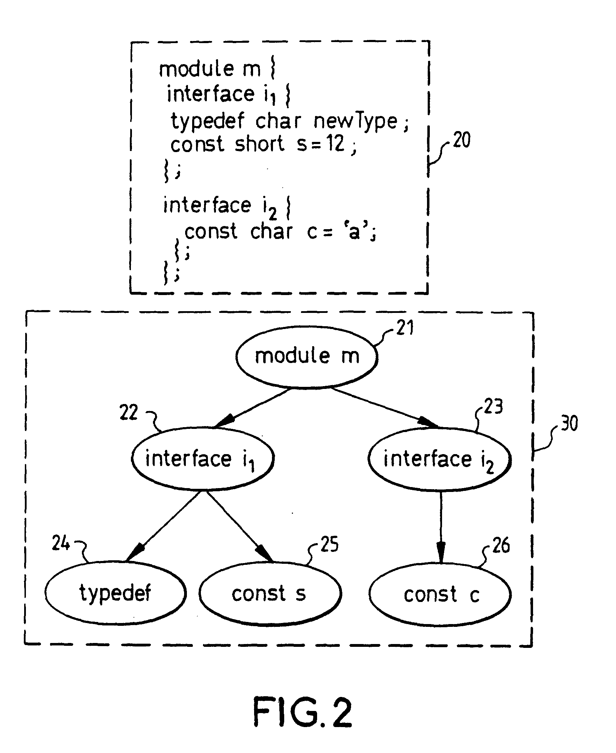

La figure 2 présente un exemple d'organisation du fichier intermédiaire 6. L'unité frontale FE décompose les spécifications d'entrée 4 en éléments logiciels de base 21, 22, 23, 24, 25, 26 formant des noeuds reliés entre eux selon une arborescence fonctionnelle conforme aux spécifications 4. Les éléments logiciels sont les données extraites du fichier de spécifications 4. A titre d'exemple l'arbre syntaxique illustré par la figure 2 comporte un nombre réduit d'unités logicielles, dans le but notamment de faciliter la description du fichier intermédiaire 6. Cet arbre syntaxique est représenté sous un exemple de forme codée 20 et sous un exemple de forme schématique 30. En particulier, l'arbre syntaxique de la figure 2 se rapporte à un sous-programme, c'est-à-dire une structure ou un module m, contenu dans le fichier de spécifications 4. Par suite de l'analyse grammaticale et syntaxique de ce fichier 4, l'unité frontale FE détecte un module m. Elle crée alors un noeud 21 correspondant à ce module, ce noeud étant par exemple intégré dans une arborescence plus générale. Puis, l'analyse effectuée par l'unité FE lui permet de détecter que le module m traite deux interfaces, une interface i₁ et une interface i₂. En conséquence, elle crée un noeud 22 correspondant à l'interface i₁ relié en aval au noeud 21 du module m, et elle crée un noeud 23 correspondant à l'interface i₂ relié en aval au noeud 21 du module m. En descendant d'un niveau dans l'arborescence, un premier noeud 24 et un deuxième noeud 25 sont reliés au noeud 22 de l'interface i₁, et un troisième noeud 26 est relié au noeud 23 de l'interface i₂. Les premier et deuxième noeuds 24, 25 correspondent respectivement à une variable et à une constante utilisées pour l'interface i₁. Le troisième noeud correspond à une constante c utilisée pour l'interface i₂. Les noeuds associés aux variables et les constantes peuvent notamment être placés en bout de branche. Dans le cas d'une application de gestion de trafic aérien, ces variables sont par exemple des données relatives aux avions ou aux pistes.

Un programmateur du fichier d'instruction 3 doit notamment manipuler les données contenues dans le fichier intermédiaire 6. Or, ces données peuvent être stockées de telle sorte qu'elles sont difficilement accessibles. A cet effet, l'arbre syntaxique peut être présenté sous forme schématique 30 au programmateur. C'est en fait une présentation des données de spécifications originales 4 organisées selon un arbre logique. Ainsi, pour chaque structure du langage de spécifications utilisé, le fichier d'instructions 3 permet d'accéder aux données concernant cette structure, par exemple le module m, les interfaces i₁, i₂, les constantes s et a, et de parcourir cette structure dans l'arbre syntaxique.

Dans le fichier d'instructions 3, à chaque noeud de l'arbre syntaxique est associée une règle et la façon dont est appliquée cette règle. L'arbre syntaxique permet par ailleurs de reconnaître la nature des objets ou éléments logiciels associés aux noeuds. Les natures possibles sont par exemple les interfaces, les variables, les constantes ou encore les opérations et fonctions logiques ou mathématiques. Les règles sont adaptées à chaque type ou chaque nature d'élément logiciel. En particulier, lorsqu'il s'agit d'une interface, l'adresse physique de cette dernière doit être indiquée ainsi que par exemple un protocole de communication connu par ailleurs. Les variables et les constantes doivent être précisées. Il peut par exemple s'agir de variables représentatives de vitesses, de position, ou encore de n'importe quel types de grandeurs physiques. A titre d'exemple, pour le noeud 21 associé au module m, on indique dans le fichier d'instructions 3 les règles de programmation des interfaces i₁ et i₂. De même pour chacun des noeuds 22, 23 associés à ces interfaces, on indique les règles de programmation des constantes ou des variables correspondant aux noeuds de niveau inférieur 24, 25, 26. Les règles de programmation associées à chaque noeud sont bien sûr fonction du langage de sortie 7. Le fichier d'instruction comporte donc les règles de programmation du langage de sortie, associées à chaque élément logiciel d'un noeud.

Le fichier d'instructions 3 commande en quelque sorte l'unité BE. Il permet notamment d'extraire les données 21, 22, 23, 24, 25, 26 du fichier intermédiaire 6 et de commander la génération de code effectuée par l'unité BE qui utilise ces données. Il est en particulier possible de créer autant de fichiers d'instructions 3 qu'il est nécessaire pour traiter un même type de fichier de spécifications d'entrée. Ce même fichier d'entrée peut alors être la source de plusieurs générations de codes différentes, c'est-à-dire en fait de plusieurs langages différents. En particulier, un fichier d'instructions 3 est associé à chaque langage de sortie.

Plusieurs types de langage de programmation peuvent être utilisés pour créer le fichier d'instruction 3. Un langage particulier peut être adapté à l'écriture de ce fichier 3. Ce langage sera appelé langage TDL par la suite, selon l'expression anglo-saxonne « Templates Description Language ». Le langage TDL peut être un langage de programmation complet qui traite tous les éléments logiciels classiques tels que par exemples ceux que le langage C peut permettre, c'est-à-dire notamment les contrôles de structure (if, for, do, while...), les variables, les fonctions et les classes. Sa syntaxe peut ainsi par exemple ressembler à celle du langage C⁺⁺ permettant à un programmeur de créer facilement un fichier d'instructions 3. Le langage TDL permet de manipuler facilement toutes sortes de variables ou d'objets. Il peut être puissant pour manipuler des chaînes de données ou d'instructions. Le code généré 7 qui n'est rien d'autre qu'une concaténation d'une multitude de chaînes d'instructions peut ainsi être produit facilement. Le langage TDL comporte par exemple toutes les instructions nécessaires pour parcourir l'arbre syntaxique 20, 30. En particulier, TDL comporte une classe d'instructions correspondante à chaque type de noeud de l'arbre permettant notamment d'obtenir toutes les informations que le noeud contient. TDL peut par exemple permettre de mixer du code constant et du code variable. Cela signifie notamment que quelques parties du fichier d'instructions 3 peuvent être reproduites directement dans le fichier de sortie 7 sans interprétation, alors que d'autres parties sont interprétées par l'unité BE. Il est ainsi facile de générer de grandes sections de code constant en plaçant ces sections entièrement dans le fichier d'instructions 3.

Un générateur de code selon l'invention est réellement générique car l'unité de codage BE reste la même quel que soit le langage des spécifications d'entrée 4. En particulier, l'unité BE peut être codée en dur. Les avantages apportés par l'invention sont donc notamment une économie de réalisation et une grande souplesse. L'invention permet ainsi de translater n'importe quel langage informatique, défini par le fichier de spécification d'entrée 4 en n'importe quel autre langage fourni par le fichier de sortie 7. En variante de réalisation, il serait possible d'associer à l'unité frontale FE un fichier d'instructions « Template », ce qui pourrait permettre ainsi de ne pas modifier cette unité en fonction du langage d'entrée.

## Revendications

1. Générateur de code informatique à partir d'un fichier de spécifications, **caractérisé en ce qu'**il comporte au moins :
- une unité frontale (FE) créant un fichier intermédiaire (6) par analyse grammaticale et syntaxique du fichier de spécifications (4), le fichier intermédiaire comportant un arbre syntaxique (20, 30) décrivant les données du fichier de spécifications (4), chaque donnée extraite de ce fichier (4) par l'unité frontale (FE) étant associée à un noeud (21, 22, 23, 24, 25, 26) de l'arbre ;
- un fichier d'instructions (3) définissant les règles de programmation associées à chaque noeud, en fonction du code à générer (7) ;
- une unité de codage (BE) générant le code de sortie (7) par lecture du fichier intermédiaire (6) et de l'arbre syntaxique.

2. Générateur selon la revendication 1, **caractérisé en ce que** l'unité frontale (BE) lit un fichier (5) décrivant la grammaire du langage du fichier de spécifications (4).

3. Générateur selon l'une quelconque des revendications précédentes, **caractérisé en ce que** l'unité frontale (FE) décompose le fichier de spécifications (4) en éléments logiciels (21, 22, 23, 24, 25, 26) formant les noeuds de l'arbre syntaxique, selon une arborescence fonctionnelle conforme au fichier de spécifications (4), les éléments logiciels étant les données extraites de ce fichier (4).

4. Générateur selon l'une quelconque des revendications précédentes, **caractérisé en ce que** le fichier d'instructions (3) comporte les règles de programmation du code de sortie (7) associées à chaque élément logiciel d'un noeud, une règle et la façon dont est appliquée cette règle étant associée à chaque noeud.

5. Générateur selon l'une quelconque des revendications précédentes, **caractérisé en ce que** les éléments logiciels associés aux noeuds sont des interfaces, des variables, des constantes, des opérations et fonctions logiques ou mathématiques.

6. Générateur selon l'une quelconque des revendications précédentes, **caractérisé en ce que** le code de sortie (7) est un langage informatique.
